# EUROPEAN PATENT APPLICATION

(11) **EP 2 002 879 A2**
(43) Date of publication of application: **17.12.2008**
(21) Application number: 07741067.8
(22) Date of filing: 29.03.2007
(51) Int. Cl.: B01D 53/94, B01D 39/20, B01D 46/00, B01J 23/42, B01J 35/04, F01N 3/24, F01N 3/28

(54) **EXHAUST EMISSION CONTROL CATALYST AND EXHAUST EMISSION CONTROL SYSTEM**

(30) Priority: 29.03.2006 JP 2006091839
(71) Applicant: Toyota Jidosha Kabushiki Kaisha, Toyota-shi, Aichi 471-8571 (JP)
(72) Inventor: SARAI, Susumu, Toyota-shi, Aichi; 471-8571 (JP)
(74) Representative: Kuhnen & Wacker
(86) International application number: PCT/JP2007/057631
(87) International publication number: WO 2007/114495

(57) **Abstract**

PM is more securely restrained from adhering to and depositing on an exhaust gas inlet part of an exhaust emission control catalyst while avoiding disadvantages of lowering in purification performance and strength.

A straight flow type exhaust emission control catalyst 20 disposed on an exhaust gas upstream side of an exhaust emission control system includes a plurality of straight cells 21 which extend in an axial direction thereof and through which exhaust gas flows, and straight cell partition walls 22 for partitioning the straight cells 21. The straight cell partition wall 21 has at an exhaust gas inlet-side end, an introduction promoting unit 60 for promoting the introduction of exhaust gas into each straight cell 21. The introduction promoting unit 60 includes a tilted opening 61 formed in an exhaust gas inlet part of each straight cell 21 so as to be tilted with respect to an axial direction, and a tilted end face 62 formed in an exhaust gas inlet-side end face of the straight cell partition wall 22 so as to be tilted with respect to the axial direction.

## Description

### TECHNICAL FIELD

The present invention relates to an exhaust emission control catalyst and an exhaust emission control system for purifying exhaust gas which contains particulates, such as exhaust gas from diesel engines.

### BACKGROUND ART

Diesel engines emit harmful components as particulates (particulate matter: carbon fine particulates, sulfur-based fine particulates such as sulfate, hydrocarbon fine particulates with high molecular weight, etc., hereinafter will be referred to PM).

An exhaust emission control system which is integrally provided with a trap-type exhaust emission control catalyst (wall flow) and an open-type exhaust emission control catalyst (straight flow) is well known as the exhaust emission control system for purifying exhaust gas from diesel engines (see, publication of unexamined Japanese patent application No. 2004-19498, for example).

This exhaust emission control system includes a wall flow honeycomb structure and a straight flow honeycomb structure which is integrally formed on an exhaust gas upstream side of the wall flow honeycomb structure.

The wall flow honeycomb structure has a plurality of flow-in side cells of which exhaust gas outlet parts are closed, a plurality of flow-out side cells which are adjacent to the flow-in side cells and of which exhaust gas inlet parts are closed, porous cell partition walls adapted to partition the flow-in side cells and the flow-out side cells and achieve a filter function, and a catalyst layer which is formed on the cell partition wall. The cell partition walls achieving this filtering function have pores with a predetermined average pore diameter and a predetermined porosity. These pores filter exhaust gas to capture PM. And the catalyst layer is composed of a coat layer of porous oxides such as alumina, on which a catalyst metal such as platinum is supported, and PM captured by the cell partition wall is oxidized and burnt with the catalyst reaction of the catalyst metal.

On the other hand, the straight flow honeycomb structure has a plurality of straight cells through which exhaust gas flows directly, cell partition walls adapted to partition adjacent straight flows, and an oxidation catalyst layer formed on a surface of the cell partition wall. The oxidation catalyst layer oxidizes and purifies HC, CO, etc. in exhaust gas which directly flows in the straight cell.

With the thus arranged exhaust emission control system, by coaxially aligning the straight cells of the straight flow honeycomb structure and the flow-in side cells of the wall flow honeycomb structure with each other, or by providing a tilted guiding member adapted to connect the cell partition walls of the straight flow honeycomb structure and the cell partition walls of the wall flow honeycomb structure to each other, exhaust gas can be smoothly introduced from the straight cells to the flow-in side cells. Consequently, PM can be restrained from adhering to and depositing on an exhaust gas inlet part of the wall flow honeycomb structure.

However, even the above-described conventional exhaust emission control system cannot prevent PM inclusive of non-fuel components from adhering to or depositing on exhaust gas inlet-side end faces of the cell partition walls in the straight flow honeycomb structure located on an exhaust gas upstream side. As a result, the exhaust gas inlet parts of the straight cells may be clogged.

In this case, by increasing the cross-sectional area of the flow passage of the cell, the opening area of the exhaust gas inlet part is enlarged to facilitate the flowing of the exhaust gas from the exhaust gas inlet part to an inside of the cell, whereby PM can be prevented from adhering to and depositing on the exhaust gas inlet-side end faces of the cell partition walls which partition cells. However, where the cross-sectional area of the flow passage of the cell is increased simply, the cell density lowers with the increment of the cross-sectional area of the flow passage, provided that the outside diameter of the cell partition wall is not increased thereagainst. Consequently, the area of the cell partition wall, which contributes to the purification, is decreased, whereby there occur such disadvantages as lowering in purification performance of capturing of PM with the cell partition wall having a filtering function, and oxidizing and purifying with the catalyst layer which is formed on the cell partition wall, and lowering in strength of the cell partition wall.

### DISCLOSURE OF INVENTION

The present invention has been made in view of the above-described circumstances, and has the technical problem of more securely restraining PM from adhering to and depositing on an exhaust gas inlet part of an exhaust emission control catalyst, while avoiding disadvantages such as lowering in purification performance and strength.

The exhaust emission control catalyst in accordance with the present invention, which can solve the above-described problem, is an exhaust emission control catalyst which captures particulates from exhaust gas emitted from an internal combustion engine to purify the exhaust gas, and is characterized in that the catalyst includes a plurality of cells which extend in an axial direction and through which the exhaust gas flows, and cell partition walls adapted to partition the cells, and that the cell partition wall has an introduction promoting unit adapted to promote the introduction of the exhaust gas into each of the cells at exhaust gas inlet-side ends thereof.

With this exhaust emission control catalyst, the introduction promoting unit provided at the exhaust gas inlet-side end of the cell partition wall promotes the introduction of the exhaust gas, thereby facilitating entering of the exhaust gas flowing in the exhaust emission control system into the cell via the introduction promoting unit. As a result, PM in the exhaust gas can be restrained from adhering to and depositing on the exhaust gas inlet-side end face of the cell partition wall.

In addition, with this exhaust emission control catalyst, the cell partition wall can be arbitrarily arranged in other portions than the introduction promoting unit which is provided in the exhaust gas inlet-side end. Therefore, by virtue of the cell partition wall, except for the introduction promoting unit, desired purification performance and strength can be ensured.

Consequently, with the exhaust emission control catalyst in accordance with the present invention, PM can be more securely restrained from adhering to and depositing on an exhaust gas inlet part of the exhaust emission control catalyst, while avoiding disadvantages such as lowering in purification performance and strength.

In a preferred embodiment of the exhaust emission control catalyst of the present invention, the introduction promoting unit is composed of a tilted opening formed in an exhaust gas inlet part of each of the cells so as to be tilted with respect to the axial direction.

With this exhaust emission control catalyst, the exhaust gas inlet part of the cell defines the tilted opening which is tilted with respect to the axial direction thereof so that the opening area of the exhaust gas inlet part is large, as compared with the exhaust gas inlet part which opens in the direction perpendicular to the axial direction. In addition, it is considered that the exhaust gas which flows in a specific direction with respect to the tilted direction of the tilted opening (the direction perpendicular or generally perpendicular to the tilted direction) out of exhaust gases which flow within the exhaust emission control system readily enters the cell via this tilted opening. Consequently, the introduction of the exhaust gas into the cell is promoted, and the exhaust gas readily enters the cell via the tilted opening. Therefore, PM in the exhaust gas can be more securely restrained from adhering to and depositing on the exhaust gas inlet-side end face of the cell partition wall.

In addition, with this exhaust emission control catalyst, the cell partition wall can be arbitrarily arranged, except that the configuration of the cell partition wall in the exhaust gas inlet-side end is formed into a predetermined configuration so as to form the tilted opening in the exhaust gas inlet part of each cell. Therefore, by virtue of the cell partition walls, except for the exhaust gas inlet-side ends thereof, desired purification performance and strength can be ensured.

In a preferred embodiment of the exhaust emission control catalyst of the present invention, the introduction promoting unit is composed of a tilted end face which is formed in the exhaust gas inlet-side end face of the cell partition wall so as to be tilted with respect to the axial direction.

With this exhaust emission control catalyst, the exhaust gas inlet-side end face of the cell partition wall is formed into the tilted end face which is tilted with respect to the axial direction so that the exhaust gas contacting the tilted end face is guided with the tilted end face, whereby the introduction of the exhaust gas into the cell is promoted and the exhaust gas readily enters the cell. Therefore, PM in the exhaust gas can be more securely restrained from adhering to and depositing on the exhaust gas inlet-side end face of the cell partition wall.

In addition, with this exhaust emission control catalyst, the cell partition wall can be arbitrarily arranged, except that the exhaust gas inlet-side end face thereof is formed into the tilted end face. Therefore, with the cell partition wall, except for the exhaust gas inlet-side end face thereof, desired purification performance and strength can be ensured.

In a preferred embodiment of the exhaust emission control catalyst of the present invention, each of the cells is divided into a plurality of cells in the position at a predetermined distance from the exhaust gas inlet part toward an exhaust gas downstream side such that an exhaust gas passage in each of the cells diverges, thereby defining a large cell section with a larger flow passage cross-sectional area, which is provided on the exhaust gas upstream side, and a divided small cell section with a smaller flow passage cross-sectional area than that of the large cell section which is provided on the exhaust gas downstream side, and the introduction promoting unit is composed of the large cell section.

With this exhaust emission control catalyst, the flow passage cross sectional area of the large cell section on the exhaust gas upstream side, which extends from the exhaust gas inlet part to the position at a predetermined distance therefrom toward the exhaust gas downstream side is large, and the opening area of the exhaust gas inlet part is large. Therefore, the introduction of the exhaust gas into the large cell section is promoted, whereby the exhaust gas readily enters the large cell section. Consequently, PM in the exhaust gas can be more securely restrained from adhering to and depositing on the exhaust gas inlet-side end face of the cell partition wall.

And with this exhaust emission control catalyst, by dividing each cell into a plurality of cells in the position at a predetermined distance from the exhaust gas inlet part toward an exhaust gas downstream side, a divided small cell section with a smaller flow passage cross-sectional area is provided from that position toward the exhaust gas downstream side. Therefore, by virtue of the cell partition walls in the divided small cell section, desired purification performance and strength can be ensured.

Furthermore, with this exhaust emission control catalyst, the cell is divided such that the exhaust gas passage diverges, to define the large cell section and the divided small cell section so that the exhaust gas readily flows from the large cell section on the exhaust gas upstream side toward the divided small cell section on the exhaust gas downstream side.

In a preferred embodiment of the exhaust emission control catalyst of the present invention, the cell partition walls include a first cell partition walls section which is disposed on an exhaust gas upstream side composed of metal for partitioning a plurality of first cells, each having a larger flow passage cross-sectional area, and a second cell partition walls section which is disposed in the position at a predetermined distance from the first cell partition walls section toward the exhaust gas downstream side thereof for partitioning a plurality of second cells, each having a smaller flow passage cross-sectional area than that of the first cells, and the introduction promoting unit is composed of the first cells.

With this exhaust emission control catalyst, the flow passage cross-sectional area of the first cell in the first cell partition walls section which is disposed on the exhaust gas upstream side is large, and the opening area of the exhaust gas inlet part of the first cell is large. Therefore, the introduction of the exhaust gas into the first cell is promoted, whereby the exhaust gas readily enters the first cell. Consequently, PM in the exhaust gas can be more securely restrained from adhering to and depositing on the exhaust gas inlet-side end face of the cell partition wall.

In addition, with this exhaust emission control catalyst, the first cell partition walls section is composed of metal so that even where the cell density is decreased to enlarge the flow passage cross-sectional area of the first cell, the strength of the first cell partition walls section can be readily ensured.

Furthermore, with this exhaust emission control catalyst, by virtue of the second cell partition walls section which partitions a plurality of second cells, each having a smaller flow passage cross-sectional area than that of the first cells, desired purification performance can be ensured.

The exhaust emission control catalyst in accordance with the present invention, in a preferred embodiment, a catalyst layer is formed on a surface of the cell partition wall.

With this exhaust emission control catalyst, the catalyst layer provided in the cell partition wall achieves predetermined purification performance. Where this catalyst layer is an oxidation catalyst, for example, HC, CO, etc. in the exhaust gas which flows in the cell can be oxidized and purified. And, where the cell partition wall on which the oxidation catalyst layer is formed is the cell partition wall composed of a porous wall exhibiting such a filtering function as to be capable of capturing PM with filtering, the PM captured with the cell partition wall can be oxidized and burnt with the catalyst reaction. Furthermore, where the oxidation catalyst layer further contains NOₓ occluding materials selected from alkali metal, alkali earth metals, and rare earth elements, NO₂, etc. which have been formed due to oxidation with the oxidation catalyst can be occluded by the NOₓ occluding materials so that the purification activity of NOₓ can be improved.

In addition, PM in the exhaust gas has a large lump-like configuration which is resulted from the connection of PM particles with SOF (soluble organic fraction composed of hydrocarbon-based components) as a binder, and where the oxidation catalyst layer is provided on the cell partition wall, by oxidizing SOF as the binder with the oxidation catalyst layer while the exhaust gas flows in the cells, large lumps of PM can be powdered. Therefore, disadvantages such as depositing of large lumps of PM on the exhaust gas downstream side, clogging of the cells with deposited PM can be prevented.

In a preferred embodiment of the exhaust emission control catalyst of the present embodiment, the cells include flow-in side cells, each being plugged on an exhaust gas outlet side thereof, and flow-out side cells, each being plugged on an exhaust gas inlet side thereof, and the cell partition walls are of the wall flow type, and have a filtering function.

In the wall flow type exhaust emission control catalyst, the flow-out side cells are plugged on the exhaust gas inlet side so that PM may adhere to and deposit on end faces of the plugged parts. With the exhaust emission control catalyst in accordance with the present invention, even the wall flow type catalyst can effectively restrain PM from adhering to and depositing on the end faces of the plugged parts on the exhaust gas inlet side.

The exhaust emission control system disclosed in claim 8 is characterized in that an exhaust emission control catalyst as claimed in one of claims 1 through 6, which includes straight flow type cells not plugged on both of an exhaust gas inlet side and an exhaust gas outlet side thereof, and a wall flow type exhaust emission control filter catalyst which is disposed on an exhaust gas downstream side of the exhaust emission control catalyst are provided.

In this exhaust emission control system, the straight flow type exhaust emission control catalyst as disclosed in claim 1 is disposed on the exhaust gas upstream side thereof. Therefore, with the straight flow type exhaust emission control catalyst disposed on the exhaust gas upstream side thereof, PM in exhaust gas can be restrained from adhering to and depositing on the exhaust gas inlet-side end faces of the cell partition walls. And where the oxidation catalyst is provided on the surfaces of the cell partition walls of the straight flow type exhaust emission control catalyst, SOF as the binder is oxidized with the oxidation catalyst layer while the exhaust gas flows in the cells, whereby large lumps of PM can be powdered. Therefore, the wall flow type exhaust emission control filter catalyst disposed on the exhaust gas downstream side can prevent the occurrence of such disadvantages as depositing of large lumps of PM on the exhaust gas inlet-side end faces of the cell partition walls and blocking of cells with deposited PM.

### BRIEF DESCRIPTION OF DRAWINGS

FIG. 1 is a sectional view which schematically shows a first embodiment of an exhaust emission control system.

FIG. 2 is a sectional view which schematically shows a second embodiment of an exhaust emission control system.

FIG. 3 is a sectional view which schematically shows a third embodiment of an exhaust emission control system.

FIG. 4 is a sectional view which schematically shows a fourth embodiment of an exhaust emission control system.

FIG. 5 is a sectional view which schematically shows a fifth embodiment of an exhaust emission control system.

FIG. 6 is a sectional view which schematically shows a sixth embodiment of an exhaust emission control system, and.

FIG. 7 is a sectional view which schematically shows a seventh embodiment of an exhaust emission control system.

### BEST MODE FOR CARRYING OUT THE INVENTION

Hereinafter, embodiments of the present invention will be explained with reference to the drawings.

### (Embodiment 1)

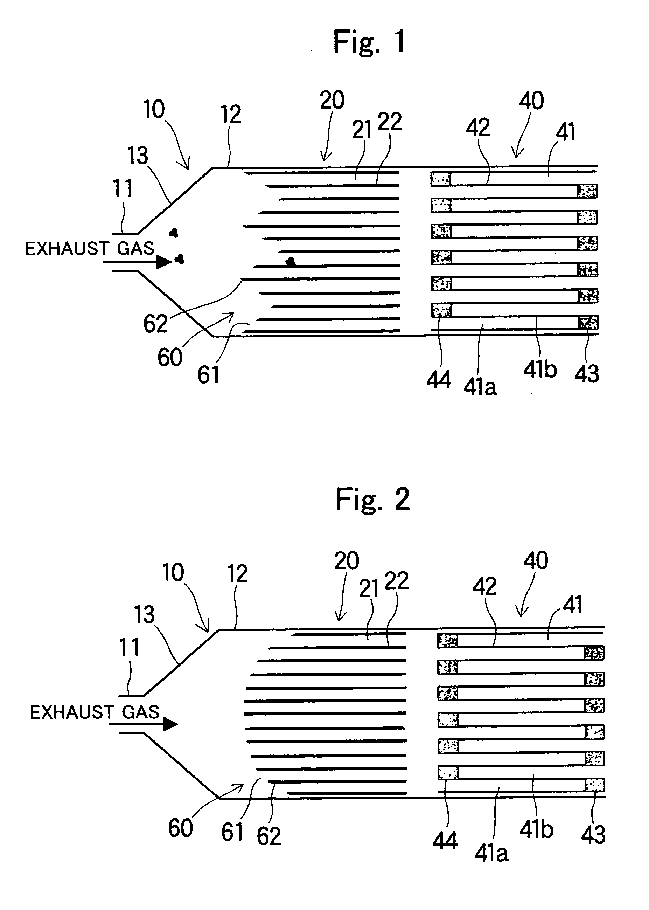

The exhaust emission control system of the present embodiment, which is schematically shown in FIG. 1, is of the tandem type, and includes a casing 10, a straight flow type exhaust emission control catalyst 20 which is disposed on the exhaust gas upstream side within this casing 10, and a wall flow type exhaust emission control filter catalyst 40 which is disposed on the exhaust gas downstream side within this casing 10 downwardly of the straight flow type exhaust emission control catalyst 20.

The casing (converter) 10 is made of metal, has a generally cylindrical configuration, and includes an inlet part 11 with a small diameter, a main part 12 with a larger diameter than that of the inlet part 11, and a taper part 13 connecting the inlet part 11 to the main part 12 integrally. The straight flow type exhaust emission control catalyst 20 and the wall flow type exhaust emission control filter catalyst 40 disposed on the exhaust gas downstream side thereof are disposed in the main part 12 of the casing 10.

The straight flow type exhaust emission control catalyst 20 is composed of a straight flow type honeycomb structure, and includes a plurality of straight cells 21 which extend in an axial direction thereof, and through which exhaust gas flows directly, straight cell partition walls 22 which partition each cell 21, and an oxidation catalyst layer (not shown) which is formed on a surface of the straight cell partition wall 22.

The wall flow type exhaust emission control filter catalyst 40 is composed of a wall flow type honeycomb structure, and includes a plurality of cells 41 which extend in an axial direction thereof, and through which exhaust gas flows, cell partition walls 42 which partition each cell 41, and an oxidation catalyst layer (not shown) which is formed on a surface of the cell partition wall 42.

The materials of the straight cell partition walls 22 of the straight flow type honeycomb structure and the cell partition walls 42 of the wall flow type honeycomb structure are not limited specifically, and, for example, heat-resistant ceramics such as cordierite, silicon carbide, silicon nitride, etc. will do. The straight cell partition walls 22 and the cell partition walls 42 can be manufactured, for example, by preparing a clay-like slurry containing a cordierite powder as a main ingredient, forming the clay-like slurry into a predetermined configuration with extrusion, etc., and firing the same.

The cell partition wall 42 of the wall flow type exhaust emission control filter catalyst 40 is composed of a porous wall with a predetermined porosity and a predetermined average pore diameter, and has a filtering function of filtering PM from exhaust gas which flows from a later describing flow-in side cell 41a to a flow-out side cell 41 b via the cell partition wall 42. Pores in the cell partition wall 42 composed of the porous cell partition wall can be formed upon manufacturing of the cell partition wall 42, for example, by mixing an inflammable material powder such as carbon powder, wood powder, starch powder, resin powder, etc. in the slurry, and making the inflammable material powder disappear in the firing step after the forming step.

The straight cell partition wall 22 of the straight flow type exhaust emission control catalyst 20 is not required to be porous, but they can be composed of a porous wall, similarly to the cell partition wall 42 of the wall flow type exhaust emission control filter catalyst 40.

The cell 41 of the wall flow type exhaust emission control filter catalyst 40 includes a plurality of flow-in side cells 41a, each being plugged with a plug 43 on an exhaust gas outlet side thereof, and a plurality of flow-out side cells 41 b, each being adjacent to the flow-in side cells 41 a and plugged with a plug 44 on an exhaust gas inlet side thereof. The plugging of the wall flow type exhaust emission control filter catalyst 40 can be carried out, for example, by closing both ends of the openings of the cells 41 with a clay-like slurry, etc., alternately, in a checkered pattern, and firing the catalyst 40.

The oxidation catalyst layer formed on the surface of the straight cell partition wall 22 and the oxidation catalyst layer formed on the surface of the cell partition wall 42 can be composed of a coat layer of a porous oxide powder, and a catalyst metal supported on this coat layer, for example. Oxides such as Al₂O₃, ZrO₂, CeO₂, TiO₂, SiO₂, etc. and composite oxides of a plurality of these oxides can be preferably used as the porous oxide. And one kind or plural kinds of noble metals of the platinum group, such as Pt, Rh, Pd, etc. can be preferably used as the catalyst metal. Transition metals such as Fe, W, Co, Ni, etc. can be also used in addition to the noble metals. And the amount of supported catalyst metal can be determined arbitrarily.

The formation of the oxidation catalyst layer can be carried out, for example, by preparing a slurry from an oxide power or a composite oxide powder, a binder component such as an alumina sol, and water, adhering the slurry to the cell partition wall, and firing the same to form the coat layer, and supporting a predetermined catalyst metal on the formed coat layer. In order to adhere the slurry to the cell partition wall, the normal immersing method can be used, but it is desirable to remove excess slurry within the pores by air blowing or sucking. In order to support the catalyst metal, it may be supported on the coat layer using a solution in which nitrates, etc. of noble metals, etc. are dissolved, by the adsorption supporting method, water-absorbing supporting method, etc. And, the oxidation catalyst layer may be formed by previously supporting noble metals, etc. on the oxide powder or the composite oxide powder, and forming the coat layer from the catalyst powder. It is desirable that the oxidation catalyst layer is also formed on a surface of the pore in the porous cell partition wall.

In addition, Noₓ occluding materials selected from alkaline metals such as K, Na, Cs, Li, etc. alkali earth metals such as Ba, Ca, Mg, Sr, etc. rare earth elements such as Sc, Y, Pr, Nd, etc. can be further supported on the oxidation catalyst layer of the wall flow type exhaust emission control filter catalyst 40. With this arrangement, No₂, etc. which are formed due to oxidation with the oxidation catalyst can be occluded with the NOₓ occluding materials so that the purification activity of NOₓ can be improved.

And with the exhaust emission control system of the present embodiment, the straight cell partition wall 22 of the straight flow type exhaust emission control catalyst 20 which is disposed on the exhaust gas upstream side of the exhaust emission control system includes an introduction promoting unit 60 for promoting the introduction of the exhaust gas into each of the straight cells 21 at an exhaust gas inlet-side (left side in FIG. 1) end.

This introduction promoting unit 60 is composed of a plurality of tilted openings 61, each being formed in an exhaust gas inlet part of each of the straight cells 21 so as to be tilted with respect to the axial direction, and a plurality of tilted end faces 62, each being formed in an exhaust gas inlet-side end face of each straight cell partition wall 22 so as to be tilted with respect to the axial direction. These tilted openings 61 and the tilted end faces 62 are formed by cutting one end of the straight cell partition wall 22 of the straight flow type honeycomb structure such that the one end has a generally saw-toothed section which is perpendicular to the axial direction

In this case, the tilted angles of the tilted openings 61 and the tilted end faces 62 are not limited specifically, but it is preferable to determine them to the angle of about 30 through 60 ° with respect to the axial direction.

With the exhaust emission control system of the present embodiment, the straight flow type exhaust emission control catalyst 20 which is disposed on the exhaust gas upstream side of the exhaust emission control system has the tilted openings 61 and the tilted end faces 62 as the introduction promoting unit 60.

Since the exhaust gas inlet part of the straight cell 21 of the straight flow type exhaust emission control catalyst 20 defines the tilted opening 61 which is tilted with respect to the axial direction thereof, as described above, the opening area of the exhaust gas inlet part of the straight cell 21 is large, as compared with that of the exhaust gas inlet part which opens at right angles to the axial direction. In addition, the exhaust gas which flows in a specific direction relative to the tilted direction of the tilted opening 61 (direction at right angles or generally right angles to the tilted direction) out of the exhaust gases which flow within the exhaust emission control system is considered to readily flow into the straight cell 21 from the tilted opening 61. Consequently, the introduction of the exhaust gas into the straight cell 21 is promoted, whereby the exhaust gas readily enters the straight cell 21 from the tilted opening 61. In addition, in this straight flow type exhaust emission control catalyst 20, the exhaust gas inlet-side end face of the straight cell partition wall 22 defines the tilted end face 62 which is tilted with respect to the axial direction so that the exhaust gas contacting this tilted end face 62 is guided with the tilted end face 62, and consequently, the introduction of the exhaust gas into the straight cell 21 is promoted to facilitate the entering of the exhaust gas into the straight cell 21. Therefore, PM in exhaust gas can be effectively restrained from adhering to and depositing on the exhaust gas inlet-side end face of the straight cell partition wall 22.

In addition, in the straight flow type exhaust emission control catalyst 20 of the present embodiment, the straight cell partition wall 22 as the straight flow type honeycomb structure can be arbitrarily arranged, except that the exhaust gas inlet-side end of the straight cell partition wall 22 is formed to have a predetermined configuration in order to form the tilted opening 61 in the exhaust gas inlet part of the straight cell 21, and form the tilted end face 62 in the exhaust gas inlet-side end face of the straight cell partition wall 22. Consequently, by virtue of the straight cell partition wall 22, except for the exhaust gas inlet-side end thereof, desired purification performance and desired strength can be ensured.

Therefore, the straight flow type exhaust emission control catalyst 20 of the present embodiment can effectively restrain PM from adhering to and depositing on the exhaust gas inlet part of the straight flow type exhaust emission control catalyst 20 while avoiding the disadvantages of lowering in purification performance and strength.

And with the exhaust emission control system of the present embodiment, in which the straight flow type exhaust emission control catalyst 20 is disposed on the exhaust gas upstream side, and the wall flow type exhaust emission control filter catalyst 40 is disposed on the exhaust gas downstream side thereof, as described above, the straight flow type exhaust emission control catalyst 20 can restrain PM in the exhaust gas from adhering to and depositing on the exhaust gas inlet-side end faces of the cell partition walls .

In addition, with the straight flow type exhaust emission control catalyst 20 of the present embodiment, HC, CO, etc. in exhaust gas which flows in the straight cells 21 can be oxidized and purified, because the oxidation catalyst layer is provided in the straight cell partition wall 22. And, PM in exhaust gas which flows from the inlet part 11 of the casing 10 defines large lumps in which PM particles are combined with each other with SOF as a binder, but the oxidation catalyst layer provided in the straight cell partition wall 22 oxidizes SOF as the binder while the exhaust gas flows in the straight cell 21, whereby large lumps of PM can be powdered. As a result, in the wall flow type exhaust emission control filter catalyst 40 which is provided on the exhaust gas downstream side, such disadvantages as deposition of large lumps of PM on the exhaust gas inlet-side end face of the cell partition wall 42 and the plug 44, and blocking of the cell with the deposited PM can be avoided.

### (Embodiment 2)

The exhaust emission control system of the present embodiment, which is schematically shown in FIG. 2, is the system in which the construction of the tilted opening 61 and the tilted end face 62 as the introduction promoting unit 60 in the straight flow type exhaust emission control catalyst 20 of Embodiment 1 is modified.

More specifically, the tilted opening 61 and the tilted end face 62 of the present embodiment are formed by cutting one end of the straight cell partition wall 22 of the straight flow type honeycomb structure into a smoothly arched configuration so as to have a generally hemisphere configuration which protrudes to the exhaust gas upstream side.

In the present embodiment, the tilted angle of the tilted opening 61 and the tilted end face 62 is the minimum (generally right angles to the axial direction) at an axial center of the straight flow type honeycomb structure, and is gradually increased from the axial center toward the outer periphery thereof.

Other constructions are similar to those of the preceding Embodiment 1, and consequently, descriptions thereof will be omitted.

Therefore, the present embodiment achieves the operational advantages similar to those of the preceding Embodiment 1.

### (Embodiment 3)

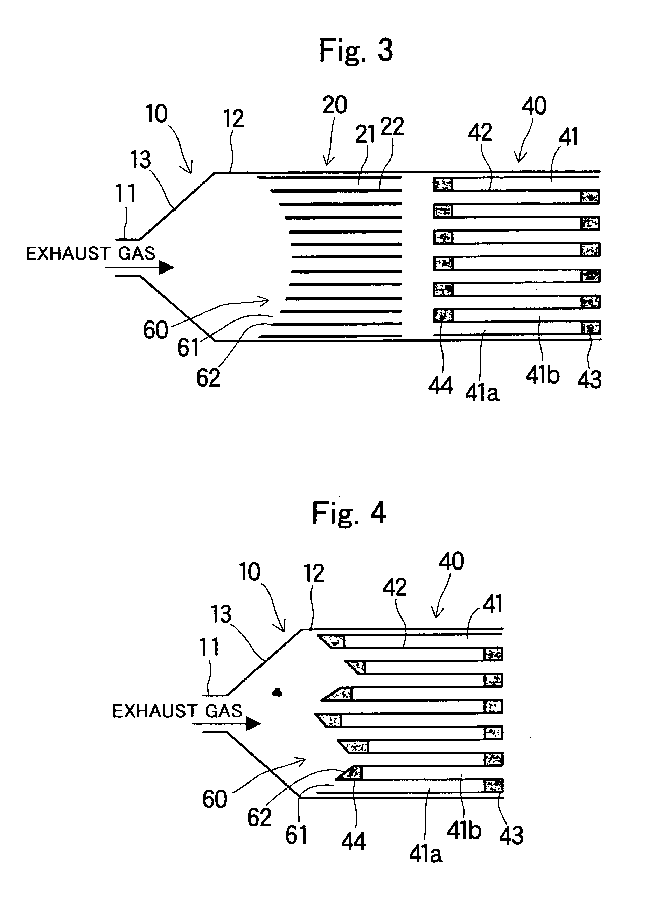

The exhaust emission control system of the present embodiment, which is schematically shown in FIG. 3, is the system in which the construction of the tilted opening 61 and the tilted end face 62 as the introduction promoting unit 60 in the straight flow type exhaust emission control catalyst 20 of the preceding Embodiment 1 is modified.

More specifically, the tilted opening 61 and the tilted end face 62 of the present embodiment are formed by cutting one end of the straight cell partition wall 22 of the straight flow type honeycomb structure into a smoothly arched configuration (a bawl-shaped configuration) so as to have a generally hemisphere configuration which is depressed to the exhaust gas upstream side.

In the present embodiment, the tilted angle of the tilted opening 61 and the tilted end face 62 is the minimum (generally right angles to the axial direction) at an axial center of the straight flow type honeycomb structure, and is gradually increased from the axial center toward the outer periphery thereof.

Other constructions are similar to those of the preceding Embodiment 1, and consequently, descriptions thereof will be omitted.

Therefore, the present embodiment achieves the operational advantages similar to those of the preceding Embodiment 1.

### (Embodiment 4)

The exhaust emission control system of the present embodiment, which is schematically shown in FIG. 4, is of the single type, and includes a wall flow type exhaust emission control filter catalyst 40 which is disposed in a main part 12 of a casing 10.

And the wall flow type exhaust emission control filter catalyst 40 of the present embodiment is provided with an introduction promoting unit 60 for promoting the introduction of the exhaust gas into each of flow-in side cells 41 a at exhaust gas inlet-side (left side in FIG. 4) end of the cell partition wall 42.

This introduction promoting unit 60 is composed of a tilted opening 61 which is formed in the exhaust gas inlet part of each of the flow-in side cells 41a, and is tilted with respect to the axial direction, and a tilted end face 62 which is formed in an exhaust gas inlet-side end surface of each cell partition wall 42 and each plug 44, and is tilted with respect to the axial direction thereof. These tilted opening 61 and tilted end face 62 are formed by cutting one end of the wall flow type honeycomb structure such that the end in the section at right angles to the axial direction has a generally saw-toothed configuration

The tilted angle of the tilted opening 61 and the tilted end face 62 is not limited specifically, but it is preferable to determine it to the angles of about 30 through 60 ° with respect to the axial direction.

Other constructions of the wall flow type exhaust emission control filter catalyst 40 are basically similar to those of the preceding Embodiment 1.

As described above, with the exhaust emission control system of the present embodiment, the wall flow type exhaust emission control filter catalyst 40 has the tilted openings 61 and the tilted end faces 62 as the introduction promoting unit 60.

With the wall flow type exhaust emission control filter catalyst 40, the flow-out side cells 41 b are plugged with plugs 44 on the exhaust gas inlet side thereof so that PM readily adheres to and deposits on especially the end faces of the plugs 44. With the wall flow type exhaust emission control filter catalyst 40 of the present embodiment, the tilted openings 61 and the tilted end faces 62 as the introduction promoting unit 60 can effectively restrain PM from adhering to and depositing on the end faces of the plugs 44, etc. on the exhaust gas inlet side thereof.

With the wall flow type exhaust emission control filter catalyst 40 of the present embodiment, the cell partition walls 42 as the wall flow honeycomb structure can be arbitrarily arranged, except that the configuration of the exhaust gas inlet-side end of the wall flow type honeycomb structure is formed into a predetermined configuration in order to form the tilted opening 61 in the exhaust gas inlet part of the flow-in side cell 41 a, and form the tilted end face 62 in the inlet end faces of the cell partition walls 42 and the plugs 44. Consequently, by virtue of other portions of the cell partition walls 42 than the exhaust gas inlet-side ends thereof, desired purification performance and strength can be ensured.

Therefore, the wall flow type exhaust emission control filter catalyst 40 of the present embodiment can effectively restrain PM from adhering to and depositing on the exhaust gas inlet part of the wall flow type exhaust emission control filter catalyst 40 while avoiding the disadvantages of lowering in purification performance and strength.

The configurations and dimensions of the tilted openings 61 and the tilted end faces 62 in the preceding embodiments 1 through 4 can be variously modified provided that they can achieve the function as the introduction promoting unit 60.

### (Embodiment 5)

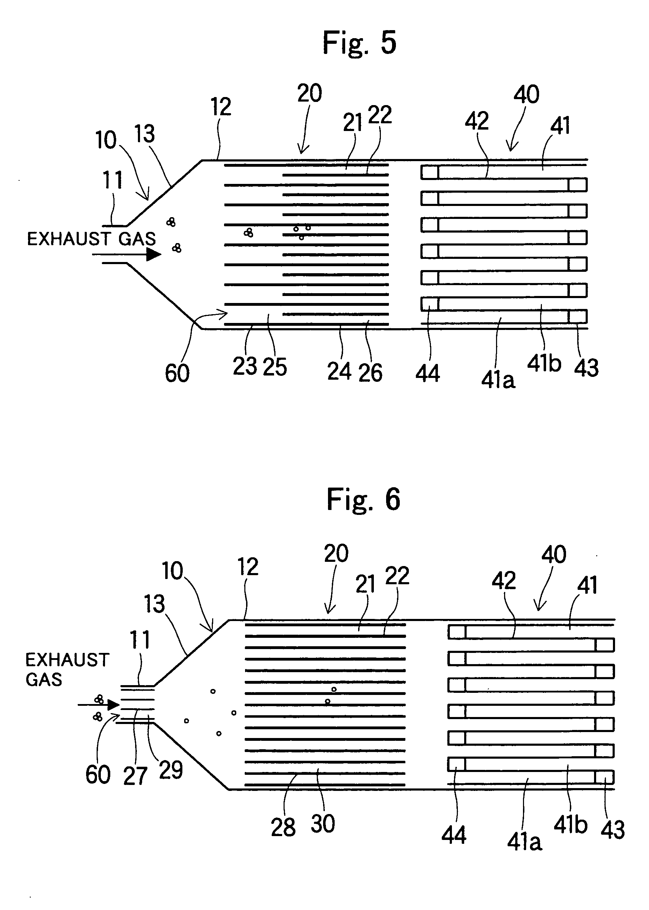

The exhaust emission control system of the present embodiment, which is schematically shown in FIG. 5, is the device in which the construction of the introduction promoting unit 60 in the straight flow type exhaust emission control catalyst 20 of the preceding Embodiment 1 is modified by changing the arrangement of the straight cell partition walls 22.

More specifically, with the straight flow type exhaust emission control catalyst 20 of the present embodiment, the straight cell partition walls 22 of the straight flow type honeycomb structure include a large cell partition walls section 23 which extends from an exhaust gas inlet part to a position at a predetermined distance toward an exhaust gas downstream side, and a small cell partition walls section 24 which extends from the above-described position to the exhaust gas outlet part. With this arrangement, each of the straight cells 21 of this straight flow type exhaust emission control catalyst 20 is divided into a plurality of cells such that the exhaust gas passage within each straight cell 21 diverges in the position at a predetermined distance from the exhaust gas inlet part on the exhaust gas downstream side, whereby a plurality of large cell sections 25, each having a large flow passage cross-sectional area and a low cell density, are provided on the exhaust gas upstream side, and a plurality of divided small cell sections 26, each having a smaller flow passage cross-sectional area and a higher cell density than those of the large cell section 25, are provided on the exhaust gas downstream side. And the introduction promoting unit 60 is composed of the large cell sections 25.

The straight flow type honeycomb structure thus arranged can be manufactured, for example, by forming the large cell partition walls section 23 and the small cell partition walls section 24 separately from each other, and bonding two sections to each other, or by forming the small cell partition walls section 24 so as to have the axial length corresponding to that of the large cell partition walls section 23, and partially cutting axial ends from the small cell partition walls section 24 with the large cell partition walls section 23 being remained.

Therefore, in the straight flow type exhaust emission control catalyst 20 of the present embodiment, the cross-sectional area of the flow passage of the large cell section 25 on the exhaust gas upstream side, which extends from the exhaust gas inlet part to the position at a predetermined distance on the exhaust gas downstream side is large, and the opening area of the exhaust gas inlet part is large. Therefore, the introduction of the exhaust gas into the large cell section 25 is promoted, and the exhaust gas readily enters the large cell section 25. Consequently, PM in the exhaust gas can be securely restrained from adhering to and depositing on the exhaust gas inlet-side end faces of the large cell partition walls section 23 of the straight cell partition walls 22.

And in this straight flow type exhaust emission control catalyst 20, the straight cell 21 is divided to a plurality of fuel passages in the position at a predetermined distance from the exhaust gas inlet part to the exhaust gas downstream side, whereby a divided small cell section 26 with a smaller flow passage cross-sectional area and a higher cell density is provided from the above-described position to the exhaust gas downstream side. As a result, by virtue of the small cell partition walls section 24 in this divided small cell section 26, desired purification performance and strength can be ensured.

In addition, with this straight flow type exhaust emission control catalyst 20, the straight cell 21 is divided such that the exhaust gas passage diverges, thereby defining the large cell section 25 and the divided small cell section 26. Therefore, exhaust gas readily flows smoothly from the large cell section 25 on the exhaust gas upstream side to the divided small cell section 26 on the exhaust gas downstream side.

Other constructions and operational advantages are similar to those of the preceding Embodiment 1, and consequently, descriptions thereof will be omitted.

### (Embodiment 6)

The exhaust emission control system of the present embodiment, which is schematically shown in FIG. 6, is the device in which the arrangement of the straight flow type exhaust emission control catalyst 20 of the preceding Embodiment 1 is modified, and the introduction promoting unit 60 is provided in an inlet part 11 of a casing 10.

More specifically, in the straight flow type exhaust emission control catalyst 20 of the present embodiment, the straight cell partition walls 22 include a first cell partition walls section 27 provided on the exhaust gas upstream side, and a second cell partition walls section 28 provided in the position at a predetermined distance from the first cell partition walls section 27 to the exhaust gas downstream side. And the first cell partition walls section 27 partitions a plurality of first cells 29 with a large flow passage cross-sectional area and a lower cell density, and the second cell partition walls section 28 partitions second cells 30 with a smaller flow passage cross-sectional area and a higher cell density than those of the first cells 29.

In addition, with the straight flow type exhaust emission control catalyst 20 of the present embodiment, the first cell partition walls section 27 is composed of metal, and the second cell partition walls section 28 is composed of heat-resistant ceramics such as cordierite, similarly to the preceding Embodiment 1.

And in the exhaust emission control system of the present embodiment, the first cell partition walls section 27 is disposed in the inlet part 11 of the casing 10.

And Oxidation catalyst layers are formed on surfaces of the first cell partition walls section 27 and the second cell partition walls section 28, similarly to the preceding Embodiment 1.

Therefore, in the straight flow type exhaust emission control catalyst 20 of the present embodiment, the cross-sectional area of the flow passage of the first cell 29 in the first cell partition walls section 27 which is disposed on the exhaust gas upstream side is large, and the opening area of the exhaust gas inlet part of the first cell 29 is large. Consequently, the introduction of the exhaust gas into the first cell 29 is promoted, and the exhaust gas readily enters the first cell 29. Therefore, PM in exhaust gas can be more securely restrained from adhering to and depositing on the exhaust gas inlet-side end faces of the first cell partition walls section 27 of the straight cell partition walls 22.

In addition, in this straight flow type exhaust emission control catalyst, the first cell partition walls section 27 is composed of metal so that even where the cell density of the first cell 29 is lowered to enlarge the cross-sectional area of the flow passage of the first cell 29, the strength of the first cell partition walls section 27 can be readily ensured.

Furthermore, with this straight flow type exhaust emission control catalyst 20, desired purification performance can be ensured with the second cell partition walls section 28 which partitions the second cell 30 of which the flow passage cross-sectional area is smaller than that of the first cell 29 and of which the cell density is higher than that of the first cells 29.

Other constructions and operational advantages are basically similar to those of the preceding Embodiment 1, and consequently, descriptions thereof will be omitted.

In the preceding Embodiment 6, the position of the first cell partition walls section 27 is not limited to the inlet part 11 of the casing 10. For example, the first cell partition walls section 27 can be provided in the main part 12 of the casing 10 on the exhaust gas upstream side of the second cell partition walls section 28.

### (Embodiment 7)

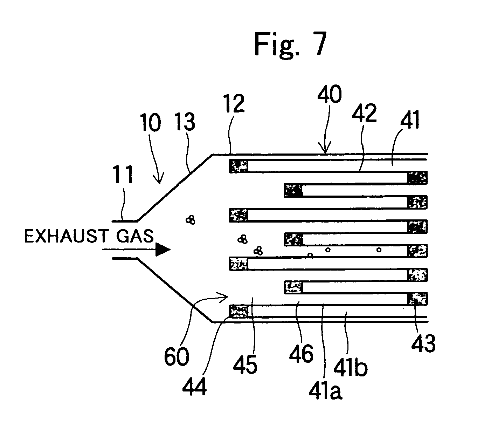

The exhaust emission control system of the present embodiment, which is schematically shown in FIG. 7, is of the single type, and includes a wall flow type exhaust emission control filter catalyst 40 which is disposed in a main part 12 of a casing 10.

And the wall flow type exhaust emission control filter catalyst 40 of the present embodiment is provided with an introduction promoting unit 60 for promoting the introduction of exhaust gas into each of cells 41 at the exhaust gas inlet-side (left side in FIG. 7) end of the cell partition wall 42.

More specifically, in the wall flow type exhaust emission control filter catalyst 40 of the present embodiment, each of the flow-in side cells 41 a is divided to a plurality of cells in the position at a predetermined distance from the exhaust gas inlet part to the exhaust gas downstream side such that the exhaust gas passage in each flow-in side cell 41 a diverges, whereby a plurality of large cell sections 45 having a large flow passage cross-sectional area and a low cell density are provided on the exhaust gas upstream side, and a plurality of divided small cell section 46 having a small flow passage cross-sectional area and a higher cell density, as compared with the large cell sections 45, are provided on the downstream side thereof. And the above-described introduction promoting unit 60 is composed of the large cell sections 45.

The wall flow type honeycomb structure thus arranged can be manufactured, for example, by forming the cell partition walls of the wall flow honeycomb structure with a cell density identical to that of the divided small cells 46, and partially cutting axial ends of the cell partition walls so as to thin up the same.

Therefore, in the wall flow type exhaust emission control filter catalyst 40 of the present embodiment, the cross-sectional area of the passage of the large cell section 45 on the upstream side, which extends from the exhaust gas inlet part to the position at a predetermined distance to the exhaust gas downstream side, is large, and the opening area of the exhaust gas inlet part is large. Consequently, the introduction of exhaust gas into the large cell section 45 is promoted, and exhaust gas readily enters the large cell section 45. As a result, PM in the exhaust gas can be securely restrained from adhering to and depositing on the cell partition walls 42 and the exhaust gas inlet-side end faces of the plugs 44.

And in this wall flow type exhaust emission control filter catalyst 40, the flow-in side cell 41 a is divided to a plurality of fuel passages in the position at a predetermined distance from the exhaust gas inlet part to the exhaust gas downstream side, whereby a divided small cell section 46 having a small flow passage cross-sectional area and a high cell density on the exhaust gas downstream side of the above-described position. As a result, by virtue of the cell partition walls 42 in this divided small cell section 46, desired purification performance and strength can be ensured.

In addition, with this wall flow type exhaust emission control filter catalyst 40, the flow-in side cell 41a is divided such that the exhaust gas passage diverges, thereby defining a large cell section 45 and a divided small cell section 46. Therefore, exhaust gas readily flows smoothly from the large cell section 45 on the exhaust gas upstream side to the divided small cell section 46 on the exhaust gas downstream side.

Other constructions and operational advantages are similar to those of the preceding Embodiment 1 and Embodiment 4, and consequently, descriptions thereof will be omitted.

### [Examples]

Hereinafter, the present invention will be explained in more detail based on several examples, but the present invention is not limited thereto.

### (Example 1)

In the present example, the exhaust emission control system of the preceding Embodiment 1, which was schematically shown in FIG. 1, was manufactured by the following method.

A straight flow type honeycomb structure having rectangular cells with a diameter of 129 mm, axial length of 130 mm, wall thickness of 100 µm and the number of cells of 400 cpsi (cell/inch²) and composed of cordierite was prepared.

And a tilted opening 61 and a tilted end face 62 as an introduction promoting unit 60 were formed by cutting one end of a straight cell partition wall 22 of the straight flow type honeycomb structure by 15 mm in the directions tilted at 45° with respect to the axial direction such that the one end in the section perpendicular to the axial direction has a generally saw toothed configuration.

Then, this straight flow type honeycomb structure was subjected to wash coating with a slurry which contains alumina powder as a main ingredient, drying at 110 °C and firing at 450 °C, thereby forming a coat layer. Next, Pt was supported on the above-described coat layer by the impregnation supporting method, thereby forming an oxidation catalyst layer on a surface of the straight cell partition wall 22. At this time, the amount of the supported Pt per liter of the straight flow type honeycomb structure was determined to 3 g.

With this method, a straight flow type exhaust emission control catalyst 20 was manufactured.

On the other hand, a straight flow type honeycomb structure having rectangular cells with a diameter of 129 mm, axial length of 150 mm, wall thickness of 300 µm and the number of cells of 300 cpsi, and composed of cordierite was prepared.

And a powder having the cordierite composition composed of alumina, talc, kaolin and silica, was mixed with a predetermined amount of an organic binder and water to prepare a cream-like paste which exhibits stable shape-retentivity. Plugs 43 were formed by plugging one axial ends of alternate cells of the straight flow type honeycomb structure with this paste by means of a paste injecting machine (dispenser), whereas plugs 44 were formed by plugging the other axial ends of cells which are not plugged with the plugs 43. Then, the thus plugged honeycomb structure was fired at 1400 °C to form flow-in side cells 41 a and flow-out side cells 41 b of a wall flow type honeycomb structure.

Then, this wall flow type honeycomb structure was subjected to wash coating of slurry containing alumina powder as a main ingredient, drying at 110 °C and firing at 450 °C, thereby forming a coat layer. Next, Pt was supported on the above-described coat layer by the impregnation supporting method, thereby forming an oxidation catalyst layer on a surface of a cell partition wall 42. At this time, the amount of the supported Pt per liter of the wall flow type honeycomb structure was determined to 2 g.

With this method, a wall flow type exhaust emission control filter catalyst 40 was manufactured.

Next, the straight flow type exhaust emission control catalyst 20 was disposed in a main part 12 of a casing 10 on the exhaust gas upstream side thereof, and the wall flow type exhaust emission control filter catalyst 40 was disposed on the exhaust gas downsteam side thereof, thereby completing the exhaust emission control system of this example.

### (Example 2)

In the present example, the exhaust emission control system of the preceding Embodiment 2, which was schematically shown in FIG. 2, was manufactured.

In the present example, a straight flow type honeycomb structure similar to that of Example 1 was prepared, and tilted openings 61 and tilted end faces 62 as the introduction promoting unit 60 were formed by cutting one end of the straight cell partition wall 22 of the straight flow type honeycomb structure in a smoothly arched configuration such that the one end has a generally hemisphere configuration protruding to the exhaust gas upstream side. The axial length of this introduction promoting unit 60 was determined to 40 mm.

Other arrangements of the present example are similar to those of Example 1.

### (Example 3)

In the present example, the exhaust emission control system of the preceding Embodiment 3, which was schematically shown in FIG. 3, was manufactured.

In the present example, a straight flow type honeycomb structure similar to that of example 1 was prepared, and tilted openings 61 and tilted end faces 62 as the introduction promoting unit 60 were formed by cutting one end of the straight cell partition wall 22 of the straight flow type honeycomb structure in a smoothly arched configuration such that the one end has a generally hemisphere (bawl-shaped) configuration depressing to the exhaust gas upstream side. The axial length of this introduction promoting unit 60 was determined to 40 mm.

Other arrangements of the present example are similar to those of Example 1.

### (Example 4)

In the present example, the exhaust emission control system of the preceding Embodiment 4, which was schematically shown in FIG. 4, was manufactured.

In the present example, a wall flow type exhaust emission control filter catalyst 40 similar to that of Example 1 was prepared, and tilted openings 61 and tilted end faces 62 as the introduction promoting unit 60 were formed by cutting one end of a cell partition wall 42 and a plug 44 of the wall flow type exhaust emission control filter catalyst 40 by 15 mm in the directions tilted at 45° with respect to the axial direction such that the one end in the section perpendicular to the axial direction has a generally saw toothed configuration.

And, the wall flow type exhaust emission control filter catalyst 40 was arranged in a main part 12 of a casing 10 to complete the exhaust emission control system of the present example.

### (Example 5)

In the present example, the exhaust emission control system of the preceding Embodiment 5, which was schematically shown in FIG. 5, was manufactured.

A first straight flow type honeycomb substrate having rectangular cells (large cell section 25) with a diameter of 129 mm, axial length of 40 mm, wall thickness of 100 µm and the number of cells of 100 cpsi (cell/inch²) and composed of cordierite, and a second straight flow type honeycomb substrate having rectangular cells (divided small cell section 26) with a diameter of 129 mm, axial length of 90 mm, wall thickness of 100 µm and the number of cells of 400 cpsi (cell/inch²) and composed of cordierite were prepared.

And, an oxidation catalyst layer was formed on a surface of each straight flow type honeycomb substrate by a similar method to that of Example 1. At this time, in the oxidation catalyst layer of the first straight flow type honeycomb substrate, the amount of the supported Pt per liter was determined to 4 g, whereas in the oxidation catalyst layer of the second straight flow type honeycomb substrate, the amount of the supported Pt per liter was determined to 2 g

Then, the first and second straight flow type honeycomb substrates on which the oxidation catalyst layer was respectively formed were bonded to each other.

Thus, a straight flow type exhaust emission control catalyst 20 having the large cell section 25 and the divided small cell section 26 was manufactured.

Other arrangements of the present example are similar to those of Example 1.

### (Example 6)

The present example is similar to Example 5, except that in Example 5, the number of cells of the first straight flow type honeycomb substrate in the large cell section 25 is changed to 150 cpsi, and the number of cells of the second straight flow type honeycomb substrate in the divided small cell section 26 is changed to 600 cpsi.

### (Example 7)

The present example is similar to the example 5, except that in Example 5, the axial length of the first straight flow type honeycomb substrate in the large cell section 25 is changed to 20 mm, and the axial length of the second straight flow type honeycomb substrate in the divided small cell section 26 is changed to 110 mm.

### (Example 8)

In the present example, the exhaust emission control system of the preceding embodiment 6, which was schematically shown in FIG. 6, was manufactured with the following method.

The first cell partition walls section 27 composed of metal (Fe, 20 % Cr, 5 % Al), and having rectangular cells with a diameter of 60 mm, axial length of 50 mm, wall thickness of 50 µm, and the number of cells of 200 cpsi was prepared.

And, the second cell partition walls section 28 composed of heat-resistant ceramics of cordierite, and having rectangular cells with a diameter of 129 mm, axial length of 100 mm, wall thickness of 100 µm, and the number of cells of 400 cpsi was prepared.

Next, oxidation catalyst layers were formed on surfaces of the first cell partition walls section 27 and the second cell partition walls section 28, by the method similar to that of the preceding Example 1. At this time, in the oxidation catalyst layer of the first cell partition walls section 27, the amount of the supported Pt per liter was determined to 4 g, whereas in the oxidation catalyst layer of the second cell partition walls section 28, the amount of the supported Pt per liter was determined to 2 g

Then, the first cell partition walls section 27 was disposed in an inlet part 11 of a casing 10, the second cell partition walls section 28 was disposed in the main part 12 of the casing 10, and the wall flow type exhaust emission control filter catalyst 40 was disposed on the exhaust gas downstream side thereof to complete the exhaust emission control system of the present example.

Other arrangements of the present embodiment are similar to those of Example 1.

### (Example 9)

In the present example, the exhaust emission control system of the preceding Embodiment 7, which was schematically shown in FIG. 7, was manufactured.

In this example, a straight honeycomb structure having rectangular cells with a diameter of 129 mm, axial length of 150 mm, wall thickness of 300 µm and the number of cells of 300 cpsi, and composed of cordierite was prepared.

After partially cutting axial ends of the cell partition walls of this honeycomb structure, the honeycomb structure was plugged in predetermined positions with the paste similar to that of Example 1 using a paste injecting machine having a pipe with a predetermined length, and fired to obtain a wall flow type honeycomb structure.

Next, an oxidation catalyst layer was formed in this wall flow type honeycomb structure by the method similar to that of Example 1.

As a result, a wall flow type exhaust emission control filter catalyst 40 provided with a large cell section 45 and a divided small cell section 46 such that the amount of supported Pt per liter in the oxidation catalyst layer of the large cell section 45 was 4 g, and the amount of supported Pt per liter in the oxidation catalyst layer of the divided small cell section 46 was 1 g was manufactured.

And the wall flow type exhaust emission control filter catalyst 40 was disposed in a main part 12 of a casing 10, thereby completing the exhaust emission control system of the present example.

### (Comparative example 1)

The large cell section 25 as the introduction promoting unit 60 of the preceding Example 5 was not formed.

Namely, a straight flow type exhaust emission control catalyst 20 is similar to that of the preceding Example 5, except that the catalyst includes a straight flow type honeycomb structure having rectangular cells with a diameter of 129 mm, axial length of 130 mm, wall thickness of 100 µm and the number of cells of 400 cpsi, and composed of cordierite, and that an oxidation catalyst layer is formed on an entire surface of the straight flow type honeycomb structure such that the amount of supported Pt per liter is 3 g.

### (Comparative example 2)

The large cell section 45 as the introduction promoting section 60 in the preceding Example 9 was not formed.

Namely, a wall flow type exhaust emission control filter catalyst 40 is similar to that of the preceding Example 9, except that the catalyst includes a wall flow type honeycomb structure having rectangular cells with a diameter of 129 mm, axial length of 150 mm, wall thickness of 300 µm and the number of cells of 300 cpsi, and composed of cordierite, and that an oxidation catalyst layer is formed on an entire surface of the wall flow type honeycomb structure such that the amount of supported Pt per liter thereof is 2 g.

### (Evaluation of cell blocking rate)

With respect to the exhaust emission control systems of Examples 1 through 9 and Comparative examples 1 and 2, the cell blocking rates were examined.

In this evaluation, each exhaust emission control system was installed in an exhaust system of a diesel engine of 2 liter displacement, and the diesel engine was driven for 200 hours under the condition that the fuel conversion control in exhaust gas was carried out while being driven with 11 Lap. Then, the cell blocking rate on the exhaust gas most upstream side of the exhaust emission control system was examined. The evaluation results are shown in Table 1.

**[Table 1]**

| | Cell blocking rate (%) |
|---|---|
| Example 1 | 38 |
| Example 2 | 45 |
| Example 3 | 52 |
| Example 4 | 48 |
| Example 5 | 25 |
| Example 6 | 23 |
| Example 7 | 45 |
| Example 8 | 40 |
| Example 9 | 28 |
| Comparative example 1 | 64 |
| Comparative example 2 | 78 |

As is apparent from Table 1, with the exhaust emission control systems of the comparative examples, the cell blocking rates were 64 % or more, and in contrast, with the exhaust emission control systems of the present examples, the cell blocking rates were able to be decreased to about 50 % or less.

## Claims

1. An exhaust emission control catalyst for capturing particulates from exhaust gas emitted from an internal combustion engine to purify the exhaust gas, **characterized in that** the catalyst includes:
a plurality of cells which extend in an axial direction and through which the exhaust gas flows, and cell partition walls which partition said cells,
said cell partition wall having an introduction promoting unit on an exhaust gas inlet-side end thereof for promoting the introduction of the exhaust gas into each of said cells.

2. An exhaust emission control catalyst as claimed in claim 1, wherein said introduction promoting unit is composed of a tilted opening which is formed in an exhaust gas inlet part of each of said cells so as to be tilted with respect to the axial direction.

3. An exhaust emission control catalyst as claimed in one of claim 1 and claim 2, wherein said introduction promoting unit is composed of a tilted end face which is formed in an exhaust gas inlet-side end face of each of said cell partition walls so as to be tilted with respect to the axial direction.

4. An exhaust emission control catalyst as claimed in claim 1, wherein each of said cells is divided into a plurality of cells in the position at a predetermined distance from said exhaust gas inlet part toward an exhaust gas downstream side such that an exhaust gas passage in each of said cells diverges, thereby defining a large cell section with a larger flow passage cross-sectional area, which is provided on an exhaust gas upstream side, and a divided small cell section with a smaller flow passage cross-sectional area than that of said larger cell section which is provided on the exhaust gas downstream side, and
said introduction promoting unit is composed of said large cell section.

5. An exhaust emission control catalyst as claimed in claim 1, wherein said cell partition walls include a first cell partition walls section which is disposed on an exhaust gas upstream side composed of metal for partitioning a plurality of first cells, each having a larger flow passage cross-sectional area, and a second cell partition walls section which is disposed in the position at a predetermined distance from said first cell partition walls section toward the exhaust gas downstream side for partitioning a plurality of second cells, each having a smaller flow passage cross-sectional area, and
said introduction promoting unit is composed of said first cells.

6. An exhaust emission control catalyst as claimed in one of claims 1 through 5, wherein a catalyst layer is formed on a surface of said cell partition wall.

7. An exhaust emission control catalyst as claimed in one of claims 1 through 6, wherein said cells include flow-in side cells, each being plugged on an exhaust gas outlet side thereof, and flow-out side cells, each being plugged on an exhaust gas inlet side thereof, and said cell partition walls are of the wall flow type composed of porous partition walls.

8. An exhaust emission control system **characterized in that** said system includes an exhaust emission control catalyst as claimed in one of claims 1 through 6 wherein catalyst is of the straight flow type, and said cells are not plugged on both of an exhaust gas inlet side and an exhaust gas outlet side, and a wall flow type exhaust emission control filter catalyst which is disposed on an exhaust gas downstream side of said exhaust emission control catalyst.
